# EUROPEAN PATENT APPLICATION

(11) **EP 4 159 399 A1**
(43) Date of publication of application: **05.04.2023**
(21) Application number: 22198141.8
(22) Date of filing: 27.09.2022
(51) Int. Cl.: B29C 37/00, B29C 44/14, B29C 44/58, B60R 21/2165, B29L 31/30

(54) **MOULDING ASSEMBLY FOR OBTAINING A DASHBOARD FOR A VEHICLE AND DASHBOARD OBTAINED**

(30) Priority: 29.09.2021 DE 202021105215 U
(71) Applicant: Grupo Antolin Ingenieria, S.A.U., 09007 Burgos (ES)
(72) Inventor: MEIDINGER, Christian, Allershausen (DE)
(74) Representative: Balder IP Law, S.L.

(57) **Abstract**

A Moulding assembly comprising a foaming mould comprising a first part (1) and a second (2) part which when assembled together define a moulding inner cavity, A furnishing front part (3) of a dashboard and a support part (4) of a dashboard comprising a first breakable flap (40) for allowing the exit of a passenger airbag when inflated during a crash. The support part (4) of the dashboard is attached to the first part (1) of the foaming mold and the furnishing front part (3) of the dashboard is attached to the second part (2) of the mold foaming such that an inner space is defined between the support part (3) and the furnishing front part (2) of the dashboard. The support part (4) of the dashboard comprises a plurality of slots (41) and the first part (1) of the foaming mould comprises a plurality of perforation tabs (11) passing through the slots (41) of the support part (4) of dashboard. The slots (41) are distributed conforming a perforation web defining weakening lines around at least a part of an outline of the first breakable flap (40) of the support part (4) and a longitudinal length of the perforation tabs (11) is greater than the depth of the slots (41) such that a portion of the perforation tabs (11) protrudes inside the inner space defined between the furnishing front part (3) and support part (4) of the dashboard.

## Description

### TECHNICAL FIELD

The present invention relates to the field of devices used to obtain a dashboard for a vehicle with an external skin showing no marks in the position of the breakable flap for the exit of the passenger's airbag.

### STATE OF THE ART

The dashboard of a vehicle is a fairly large plastic structure, comprising an outer decorative coating, usually of leather or synthetic material, an intermediate layer of polyurethane foam and a plastic support, usually of polypropylene reinforced with fiberglass. Underneath the plastic support there is a kind of plastic cup where an airbag is housed.

The dashboard, comprises a weakening line, defining a breakable flap which can be broken easily allowing the exit of a passenger airbag when inflated during a crash.

The problem is how to make the weakening line of all the layers of the dashboard so that it breaks in a safe way, that is to say, for a correct deployment of the airbag it has to break according to a fairly clean line and with the perfect form so that the flap hinges properly and the airbag comes out well without being torn. The airbag deployment time is also critical, so it is necessary that the weakening line breaks easily. At the same time, from an aesthetic point of view, is important that the line of weakening will not be noticed through the decorative coating.

The weakenings can be continuous or discontinuous and can be only in a part of the thickness. The problem is that the more complicated the process, the more expensive it is and the more problems it can cause.

A known way to make that line of breakage is to create discontinuities (cuts) in the plastic support and in the foam and separately in the decorative layer such that the discontinuity in the total thickness of the dashboard is enough to assure the breaking through the discontinuities or weakenings.

The way to do it normally is to obtain the plastic by injection molding and to mold the decorative layer (with the shape of the dashboard) in a separate mold. Afterwards the decorative layer and the plastic support (with the shape of the dashboard) are mounted in a foaming mold, in one half of the mold the decorative layer and in the other half of the mold the plastic support. A polyurethane foam is put in the plastic support between both pieces. Once the foam is distributed by compression over the whole dashboard and cured the foam gives consistency to the whole dashboard assembly and joins the decorative layer to the plastic support.

Currently, once he dashboard assembly is obtained, a milling cutter is used to make cuts on the back side though the plastic support and foam, following the contour of the breakable flap. The depth of the drilling has to be controlled, deep enough to ensure that it will break but little enough so that the weakening will not be noticed on the decorative layer. This is a slow procedure but not very expensive. The decorative layer is weakened in a separated process.

Sometimes lasers are used to weaken the complete assembly in one single step.

It is desirable a simple and easy way to obtain a dashboard for a vehicle with an external skin showing no marks in the position of the breakable flap for the exit of the passenger's airbag.

### DESCRIPTION OF THE INVENTION

A first aspect of the invention relates to a moulding assembly comprising
a foaming mould comprising a first part and a second part which when assembled together define a moulding inner cavity (this cavity having for example the shape of a dashboard for a vehicle)
a support part, preferably of a polypropylene reinforced with fiberglass, of a dashboard comprising a first breakable flap for allowing the exit of a passenger airbag when inflated during a crash and
a furnishing front part of a dashboard. This part will be the external face of the dashboard when mounted in a vehicle and is made of a furnishing material such as Slush Skin or other synthetic material.

The support part is the rear part of the dashboard opposite to the furnishing front part and nearer to the passenger airbag and can comprise a plurality of inner reinforcement ribs in the rear side (the side where the airbag is placed) of the first breakable flap and also a plurality of outer reinforcement ribs in the closest area surrounding the first breakable flap such that an outline of the first breakable flap is surrounded and delimited between the inner and outer reinforcement ribs.

The support part of the dashboard is attached to the first part of the foaming mold and the furnishing front part of the dashboard is attached to the second part of the foaming mold such that an inner space is defined between the support part and the furnishing front part of the dashboard. This inner space can be filled with a foam material in the foaming mold to form a foamed core part of the dashboard. The foam material can be polyurethane.

According to the invention the support part of the dashboard comprises a plurality of slots and the first part of the foaming mold comprises a plurality of perforation tabs passing through the slots of the support part of dashboard. The slots are distributed conforming a perforation web defining weakening lines around at least a part of an outline of the first breakable flap of the support part. The slots of the support part can be obtained from the support injection molding process or a tooling or milling machine.

A longitudinal length (i.e. the length in a direction substantially orthogonal to the a plane defined by the support part) of the perforation tabs is greater than the depth of the slots such that a portion of the perforation tabs protrudes inside the inner space defined between the furnishing front part and the support part of the dashboard. Thus, the foamed core obtained by the foaming of the foaming material injected the inner space comprises a plurality of hollowings (caused by the protruding part of the perforation tabs) in correspondence with the slots of the support part to generate weakened areas in the foam core in correspondence with the breaking lines produced by the slots in the support part. These hollowings in the foamed core are obtained in the same operation of foaming, in the foaming mold, used to form the foamed core thus avoiding a special operation of cutting or emptying after the conformation of the foam core.

According to the invention the furnishing front part is perforated in a previous and separated process. This avoids the possibility of any type of marks on the external skin of the furnishing part in the outline of the breakable flap.

Thus, when the airbag inflates produces the breaking of weakening lines of the first breakable flap and the breaking of the foamed part through the weakened areas and also the breaking of the previously perforated furnishing front part.

In some embodiments the moulding assembly comprises a sealing element to seal a space between the perforation tabs of the first part of the mold and the slots of the support part of the dashboard. The object of the seal being to prevents the foam material from escaping during the injection operation in the mold in the inner cavity.

The sealing element can be a slide placed in the first part of the mold surrounding a base of the perforation tabs. The base of the perforation tabs being the union area between the perforation tab and the first part of the mold. The sealing element can also be an O-ring placed in the slots of the support part and fixed tightly around the perforation tabs.

A second aspect of the invention relates to a dashboard for a vehicle obtainable with the assembly defined previously comprising
a support part, preferably of polypropylene reinforced with fiberglass, comprising a first breakable flap for allowing the exit of a passenger airbag when inflated during a crash, comprising a plurality of slots distributed in the support part defining weakening lines around at least a part of an outline of the first breakable flap
a furnishing front part, preferably of Slush Skin or other synthetic material, and
a foamed core, preferably of polyurethane, obtained by foam in place moulding, between the support part and the furnishing front part and comprising a plurality of hollowings in correspondence with the slots of the support part to generate weakened areas in the foam core in correspondence with the breaking lines produced by the slots in the support part.

The hollowings in the foamed core are obtained by in the same operation of foaming, in the foaming mold, used to form the foamed core thus avoiding a special operation of cutting or emptying after the foaming of the core.

The support part is the rear part of the dashboard opposite to the furnishing front part and nearer to the passenger airbag and can comprise a plurality of inner reinforcement ribs in the rear side (the side where the airbag is placed) of the first breakable flap and also a plurality of outer reinforcement ribs in the closest area surrounding the first breakable flap such that an outline of the first breakable flap is surrounded and delimited between the inner and outer reinforcement ribs.

The slots are distributed in the support part conforming a perforation web defining weakening lines around at least a part of the outline of the first breakable flap and the hollowings of the foam core generate weakened areas in the foam core in correspondence with the breaking lines produced by the slots in the support part. Thus, when the airbag inflates produces the breaking of weaking lines of the first breakable flap and the breaking of the foamed part through the weakened areas.

According to the invention the furnishing front part is previously perforated but the simultaneous breakage of the support part through the weakening lines and of the foam core through the weakened areas results in the breakage of the previously perforated furnishing front part. The furnishing part being previously perforated avoids the possibility of any type of marks on the external skin of the furnishing part in the outline of the breakable flap.

When the first breakable flap is parallelogram shaped the weakening lines can comprise three breaking lines in correspondence with three sides of the parallelogram whilst the fourth side is a non-perforated side. When the breaking lines collapse due to the inflation of the airbag the non-perforated side bends acting as a hinge preventing the breakable flap from becoming loose and being thrown against the passenger

In some embodiments the support part comprises a second breakable flap, the second breakable flap being placed side by side to the first breakable flap such that one of the weakening lines in the outline of the first breakable flap is common to the second breakable flap and the non-perforated sides of each flap being spaced apart from each other, at both sides of the common weakening line defining a double flap with central opening for the exit of the airbag.

When both the first breakable flap and the second breakable flap are parallelogram shaped the doubled flap should be parallelogram shaped too but defining a doubled sized window for the exit of the airbag.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows a partial view of the front side of a support part of a dashboard.
Figure 2 shows a partial view of the rear side of a support part of a dashboard.
Figure 3 shows a detailed view of the rear side of the breakable flap of the support part.
Figure 4 shows a partial cross section of a first embodiment of the foaming moulding assembly of the invention.
Figure 5 shows a partial cross section of a second embodiment of the foaming moulding assembly of the invention.

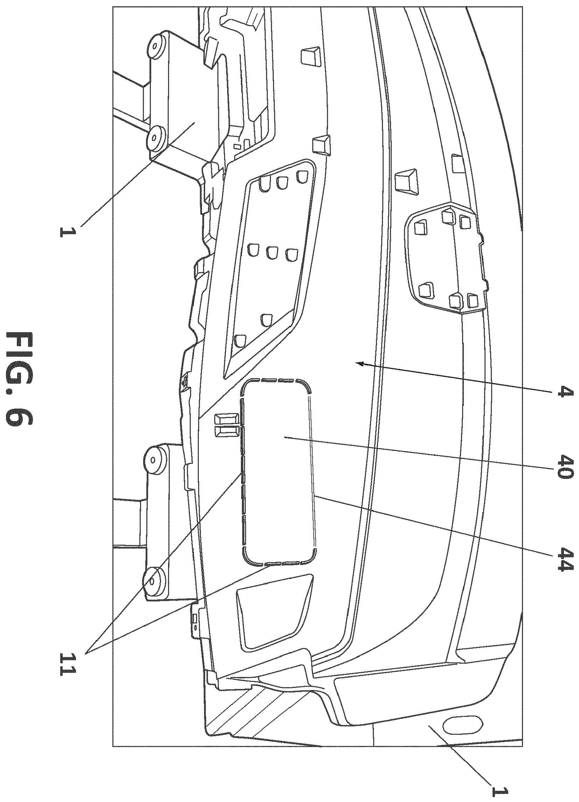

Figure 6 shows a partial view of the front side of a support part of a dashboard mounted in the foaming mould.

### DESCRIPTION OF WAYS OF CARRYING OUT THE INVENTION

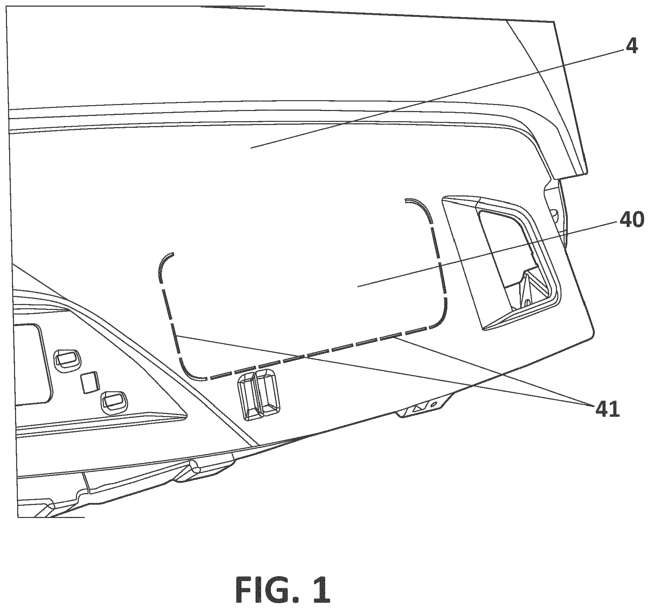

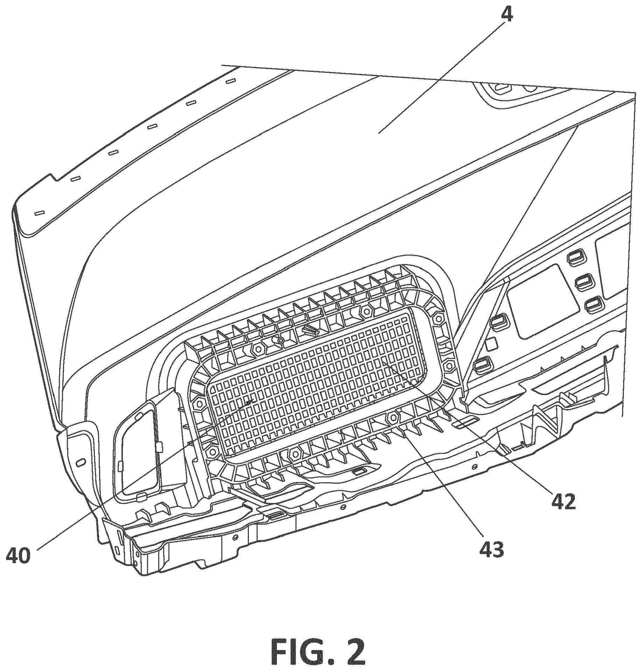

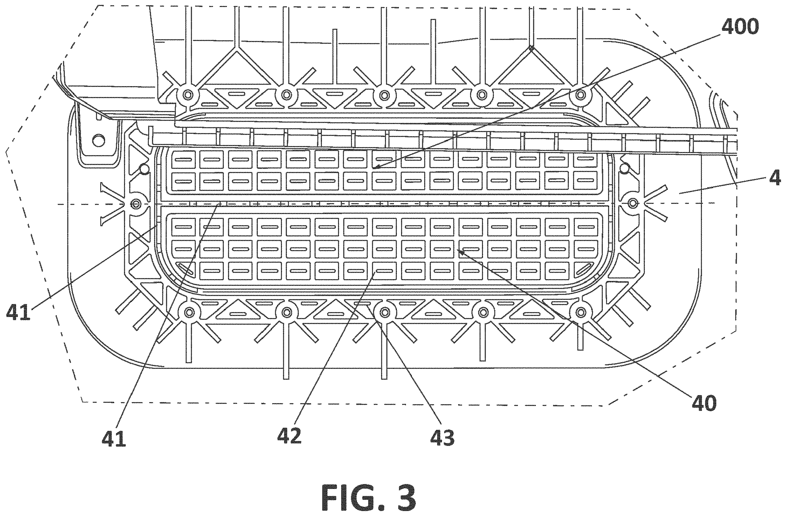

Figure 1 shows the front side of a support part (4) of a dashboard. The support part (4) comprises a breakable flap (40) which opens when the passenger's airbag inflates due to a crash or a sudden deceleration. The breakable flap (40) is constituted by multiple slots (41) distributed along three sides of a rectangle. The fourth side of the rectangle has no slots acting as a hinge during the breakage of the flap. To assure the breaking of the flap (40) along the contour defined by the slots (41) the support part comprises a plurality of inner reinforcement ribs (42) in the rear side of the first breakable flap (40) and also a plurality of outer reinforcement ribs (43) in the closest area surrounding the first breakable flap (40) such that an outline of the first breakable flap (40) is surrounded and delimited between the inner and outer reinforcement ribs (42, 43). The reinforcement ribs (42, 43) can be seen clearly in figures 2 and 3.

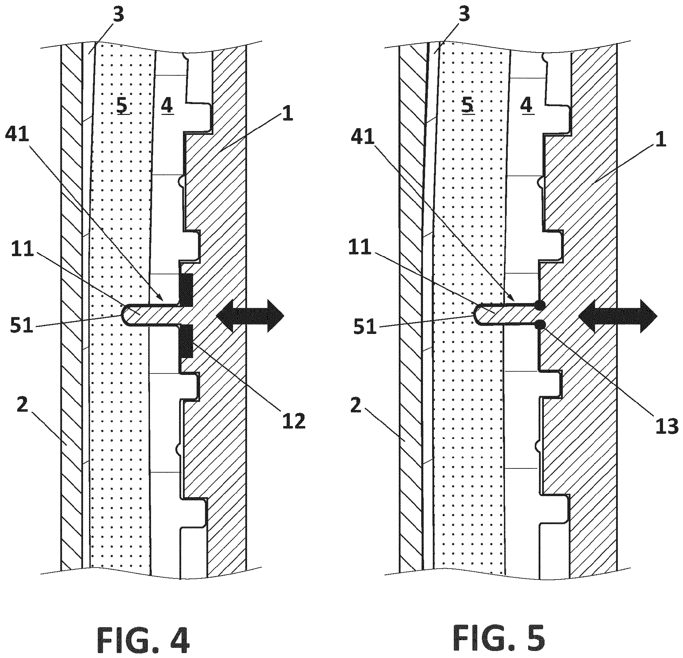

Figure 4 and 5 shows a cross section of the foaming moulding assembly comprising a first part (1) and a second (2) part which when assembled together define a moulding inner cavity. A furnishing front part (3) of a dashboard is attached to the second part (2) of the mold and a support part (4) of a dashboard is attached to the first part (1) of the mold. As can be seen in figure 4 and 5, the support part (4) and the furnishing front part (3) are spaced apart in the moulding cavity to define an inner space which can be filled with a foaming material to form a foam core (5) of the dashboard.

The support part (4) as in figure 1 comprises a first breakable flap (40) for allowing the exit of a passenger airbag when inflated during a crash.

The support part (4) of the dashboard comprises a plurality of slots (41) and the first part (1) of the mold comprises a plurality of perforation tabs (11) passing through the slots (41) of the support part (4) of dashboard. The slots (41) are distributed conforming a perforation web defining weakening lines around at least a part of an outline of the first breakable flap (40) of the support part (4). As can be seen in figure 3 the longitudinal length of the tabs (11) is greater than the depth of the slots (41) such that a portion of the perforation tabs (11) protrudes inside the inner space defined between the furnishing front part (3) and support part (4) of the dashboard. As can be seen also in figure 3 the protruding part of the perforation tabs (11) provokes the formation of a plurality of hollowings (51) in the foamed core (5) obtained, by foam in place process, between the support part (4) and the furnishing front part (3). As the perforation tabs (11) pass through the slots (41), the hollowings (51) formed are placed in correspondence with the slots (41) generating weakened areas in the foam core (5) in correspondence with the breaking lines produced by the slots (41) in the support part (4).

The hollowings (51) in the foamed core are obtained in the same operation of foaming, in the foaming mold, used to form the foamed core thus avoiding a special operation of cutting or emptying after the foaming of the core.

The assembly comprises a sealing element to seal a space between the perforation tabs (11) of the first part (1) of the mold and the slots (41) of the support part (4) of the dashboard. This sealing element prevents the foam material from escaping during the injection operation in the mold in the inner cavity.

The sealing element can be a slide placed (12) in the first part (1) of the mold surrounding a base of the perforation tabs (11), as can be seen in figure 4. The base of the perforation tabs (11) being the union area between the perforation tab (11) and the first part (1) of the mold.

In figure 5 the sealing element is an O-ring placed in the slots (41) of the support part (4) and fixed tightly around the perforation tabs (11). It is also possible to design the whole slider in a material, which seals to the mold part.

In this text, the terms first, second, third, etc. have been used herein to describe several devices, elements or parameters, it will be understood that the devices, elements or parameters should not be limited by these terms since the terms are only used to distinguish one device, element or parameter from another. For example, the first device could as well be named second device, and the second device could be named first device without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Moulding assembly comprising
a foaming mould comprising a first part (1) and a second (2) part which when assembled together define a moulding inner cavity
a furnishing front part (3) of a dashboard
a support part (4) of a dashboard comprising a first breakable flap (40) for allowing the exit of a passenger airbag when inflated during a crash
the support part (4) of the dashboard being attached to the first part (1) of the foaming mold and the furnishing front part (3) of the dashboard being attached to the second part (2) of the mold foaming such that an inner space is defined between the support part (3) and the furnishing front part (2) of the dashboard
and wherein the support part (4) of the dashboard comprises a plurality of slots (41) and the first part (1) of the foaming mould comprises a plurality of perforation tabs (11) passing through the slots (41) of the support part (4) of dashboard, the slots (41) being distributed conforming a perforation web defining weakening lines around at least a part of an outline of the first breakable flap (40) of the support part (4) and wherein a longitudinal length of the perforation tabs (11) is greater than the depth of the slots (41) such that a portion of the perforation tabs (11) protrudes inside the inner space defined between the furnishing front part (3) and support part (4) of the dashboard.

2. Moulding assembly as in claim 1 wherein the support part comprises a plurality of inner reinforcement ribs (42) in the rear side of the first breakable flap (40) and also a plurality of outer reinforcement ribs (43) in the closest area surrounding the first breakable flap (40) such that an outline of the first breakable flap (40) is surrounded and delimited between the inner and outer reinforcement ribs (42, 43).

3. Moulding assembly as in any of claims 1 or 2 wherein the first breakable flap (40) is parallelogram shaped and comprises slots (41) in three of the lateral sides such that the fourth side without slot can be bended as a hinge (44) when the other sides are broken through the slots.

4. Moulding assembly as in any of claims 1 to 3 wherein the support part comprises a second breakable flap (400), the second breakable flap (400) being placed side by side to the first breakable flap (40) such that one of the weakening lines in the outline of the first breakable flap (40) is common to the second breakable flap (400) defining therein an exit window for the airbag.

5. Moulding assembly as in any of claims 1 to 4 comprising a sealing element to seal a space between the perforation tabs (11) of the first part (1) of the mold and the slots (41) of the support part (4) of the dashboard.

6. Moulding assembly as in claim 5 wherein the sealing element is a slide (12) placed in the first part (1) of the mold surrounding a base of the perforation tabs (11) or an O-ring (13) placed in the slots (41) of the support part (4) and fixed tightly around the perforation tabs (11

7. Dashboard for a vehicle obtainable with the assembly of any of the preceding claims comprising
a support part (4) comprising a first breakable flap (40) for allowing the exit of a passenger airbag when inflated during a crash, comprising a plurality of slots (41) distributed in the support part (4) defining weakening lines around at least a part of an outline of the first breakable flap (40)
a furnishing front part (3) and
a foamed core (5) obtained by foam in place process between the support part (4) and the furnishing front part (3) and comprising a plurality of hollowings (51) in correspondence with the slots (41) of the support part (4) generating weakened areas in the foam core (5) in correspondence with the breaking lines produced by the slots (11) in the support part (1).

8. Dashboard for a vehicle as in claim 7 wherein the first breakable flap (40) comprises at least 10 slots (41) and the foamed core (5) comprises at least 10 hollowings (51).

9. Dashboard for a vehicle as in any of claims 7 or 8 wherein the support part (4) comprises a plurality of inner reinforcement ribs (42) in the rear side of the first breakable flap (40) and also a plurality of outer reinforcement ribs (43) in the closest area surrounding the first breakable flap (40) such that an outline of the first breakable flap (40) is surrounded and delimited between the inner and outer reinforcement ribs (42, 43).

10. Dashboard for a vehicle as in any of claims 7 to 9 wherein the support part comprises a second breakable flap (400), the second breakable flap (400) being placed side by side to the first breakable flap (40) such that one of the weakening lines in the outline of the first breakable flap (40) is common to the second breakable flap (400) defining therein an exit window for the airbag.
